# EUROPEAN PATENT APPLICATION

(11) **EP 1 772 243 A2**
(43) Date of publication of application: **11.04.2007**
(21) Application number: 06076791.0
(22) Date of filing: 27.09.2006
(51) Int. Cl.: B28C 7/00, B01F 15/04

(54) **Method and plant for continuously preparing coloured materials in powder form for the manufacture of ceramic articles**

(30) Priority: 04.10.2005 IT RE20050111
(71) Applicant: SACMI COOPERATIVA MECCANICI IMOLA SOCIETA' COOPERATIVA, 40026 Imola (Bologna) (IT)
(72) Inventor: Gonni, Paolo, 40026 Imola (Bologna) (IT); Graziani, Gian Piero, 40026 Imola (Bologna) (IT)
(74) Representative: Corradini, Corrado

(57) **Abstract**

A method for preparing coloured materials in powder form for the manufacture of ceramic articles, comprising the following operative steps: preparing neutral slip; feeding a predetermined quantity of said neutral slip into a liquid-solid mixer (40); feeding a metered quantity of colorant material in powder form into said liquid-solid mixer (40); and mixing together the neutral slip and colorant material in powder form in the liquid-solid mixer (40), to obtain coloured slip.

## Description

The present invention relates to a material and plant for preparing materials in powder form to constitute the base or starting product for the manufacture of ceramic articles such as fine porcelain stoneware tiles, single-fired tiles and other similar tiles.

Said base or starting materials are known to consist of quantities of granules of substantially regular dimensions generally obtained by atomization, with simultaneous drying, of an aqueous suspension of finely ground ceramic raw materials, usually known as slip.

Said slip can possess neutral coloration to hence give the base materials the typical colour of their constituent raw materials, or alternatively can be artificially coloured to give said base materials a specific colour. According to the current art, coloured slip is essentially obtained by the following operative steps:
- preparing a mixture containing water, raw materials and colorant substances in high concentration,
- homogenizing said mixture using suitable mills or turbo-dissolvers to obtain a concentrated coloured slip,
- transferring the concentrated coloured slip by pumps into a series of storage tanks provided with a stirrer to maintain the slip in suspension, and
- feeding the concentrated coloured slip into a static mixer where it is homogeneously mixed with predetermined quantities of neutral slip, to obtain slip of different colour tones.

The wide use of such known methods has enabled high quality coloured slips to be obtained, but being a discontinuous process it has also highlighted various drawbacks.

A first drawback is the need to each time produce large quantities of coloured slip of the same colour, which can only be modified significantly in terms of tone.

This fact implies extreme production cycle rigidity, it requires the provision of numerous large-size storage tanks, and requires large quantities of material to be held in store, with a simultaneous increase in plant and operating costs.

A second important drawback is the need to wash the mill or turbo-dissolver each time a slip of different colour is to be prepared, or alternatively the need to provide numerous mills or turbo-dissolvers for homogenization which are each dedicated to the production of slip of a specific colour.

As will be apparent, this fact also contributes considerably to increasing the slip production costs and plant operating and provision costs.

The object of the present invention is to overcome the said drawbacks within the framework of a simple, rational and low-cost solution.

This object is attained by a method for continuously preparing coloured materials in powder form for the manufacture of ceramic articles, comprising the following operative steps:
- preparing neutral slip;
- feeding a predetermined quantity of said neutral slip into a liquid-solid mixer;
- feeding a metered quantity of colorant material in powder form into said liquid-solid mixer; and
- mixing together the neutral slip and colorant material in powder form in the liquid-solid mixer, to obtain at its exit a continuous flow of coloured slip.

By this solution the ceramic mills can be advantageously used to produce only neutral slip, without the need to subject them to frequent washing operations, hence reducing plant costs.

Moreover, the neutral slip produced need be coloured only in the quantities strictly required to manufacture the tiles, making production very flexible and significantly reducing material stocks, with a considerable saving in terms of operating costs.

Further characteristics and advantages will be apparent on reading the ensuing description provided by way of non-limiting example, with the aid of the figures of the accompanying drawings, in which:
- Figure 1 shows schematically a plant for preparing coloured slip in accordance with the method of the invention;
- Figure 2 shows schematically a first embodiment of the mixing unit of the plant of Figure 1;
- Figure 3 shows schematically a second embodiment of the mixing unit of the plant of Figure 1;
- Figure 4 shows a first alternative system for feeding the colorant materials in powder form into the mixing unit of the plant of Figure 1;
- Figure 5 shows a second alternative system for feeding the colorant materials in powder form into the mixing unit of the plant of Figure 1;
- Figure 6 shows the functional diagram of a control system for the plant of Figure 1;
- Figure 7 shows a further embodiment of the invention.

The plant indicated overall by 1 in the figures is a plant for continuously preparing coloured slip starting from neutral slip and colouring material in powder form.

The neutral slip is an aqueous suspension of finely ground raw materials, which is produced in usual continuous or discontinuous mills (not shown) within production processes of known type and therefore not further described.

The colorant material consists of quantities of colorant powders consisting mainly of oxides able to give the neutral slip a specific homogeneous colour, in order to obtain by successive atomization a mass of solid coloured granules to be used as base material for tile manufacture.

In particular, said colorant material can consist of just one type of colorant powder, or a plurality of colorant powders of different colours which are mixed in predetermined proportions in accordance with suitable "recipes", in order to give the slip any desired coloration.

In detail, the composition of the colorant material is established during a design stage carried out in the laboratory prior to production, and which is divided substantially into two successive sub-stages known conventionally as "recipe engineering" and "pre-production analysis".

During recipe engineering a spectrophotometer is used to analyze the range of colours to be produced, possible recipes being processed on the basis of commercial colorant powders which are to be used and of the neutral slip available for the process.

During pre-production analysis the material available at the moment of entering into production is used to obtain in the laboratory ceramic samples coloured in accordance with the recipes processed during the engineering stage. The dried samples are analyzed by a spectrophotometer, with processing of recipe correction if necessary. The spectrophotometer result is then checked and the process repeated until the colour parameters are respected.

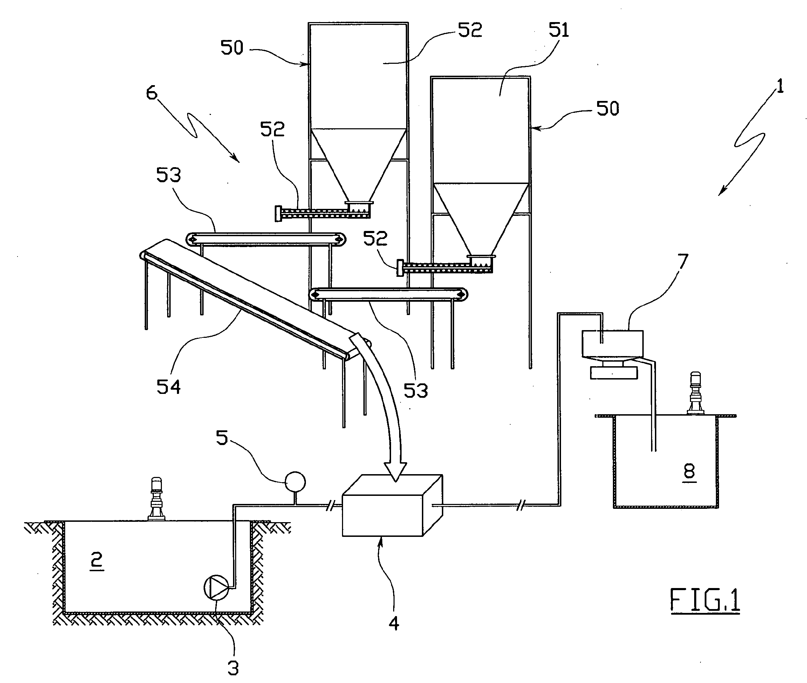

As shown in Figure 1, the plant 1 comprises a storage tank 2 into which the previously prepared neutral slip is fed, the tank being provided with a stirrer to maintain said neutral slip constantly in suspension. A pump 3 transfers the material from the storage tank 2 and feeds a mixing unit 4 with a predetermined quantity of neutral slip, the flow of which is measured by a flowmeter 5 positioned in the delivery line of the pump 3. The mixing unit 4 is simultaneously fed with a metered quantity of colorant material in powder form originating from a feed unit 6, such as to uniformly mix said colorant material with the neutral slip to obtain at its exit a continuous flow of coloured slip.

The coloured slip is then transferred to and passed through suitable screens 7, and is finally fed into the service tank 8 of a usual atomizer (not shown) able to divide it into fine droplets which are dried in a hot air stream to obtain the mass of solid coloured granules for use as base material in tile manufacture.

According to an important aspect of the invention, the feed of neutral slip, the feed of colorant material in powder form and their mixing in the mixing unit 4 are operations which take place within a continuous process, hence only that quantity of coloured slip need be prepared at any one time which is strictly required for tile production, thus significantly reducing the stock to be held and hence the operating and installation costs of the plant 1. According to a further important aspect of the invention, the plant 1 is provided with a control system able to sense the coloration of the coloured slip obtained, to compare the measured colour parameters with desired colour parameters, and to regulate by feedback the relative quantities of neutral slip and colorant material fed to the mixing unit 4, to obtain slip of the desired colour.

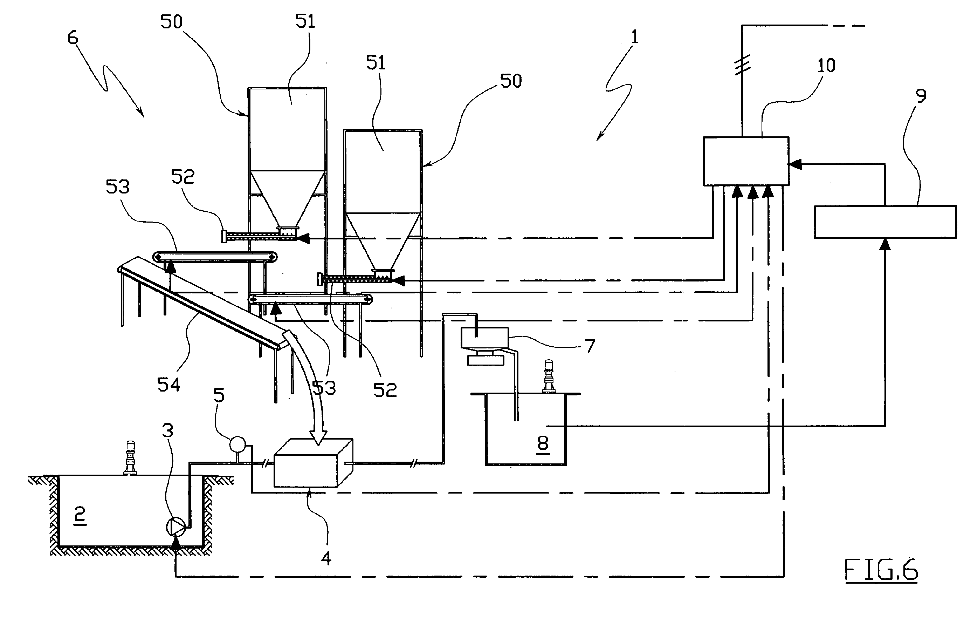

As schematically illustrated in Figure 6, said control system comprises a spectrophotometer 9 for monitoring the coloured slip obtained: samples of coloured slip are periodically withdrawn from the service tank 8, then dried and fired, to be then analyzed by the spectrophotometer 9.

The spectrophotometer 9 is connected to a logic unit 10 in which the colour parameters defined during the recipe engineering stage are stored, it being also connected to the flowmeter 5.

Said logic unit 10 compares the measured colour parameters with those desired, and on the basis of the flow rate of neutral slip instantaneously fed to the mixing unit 4 regulates the operation of the pump 3 and colorant material feed system 6 to if necessary correct the composition of this latter and/or the relative quantities of neutral slip and of colorant material fed to the mixing unit 4.

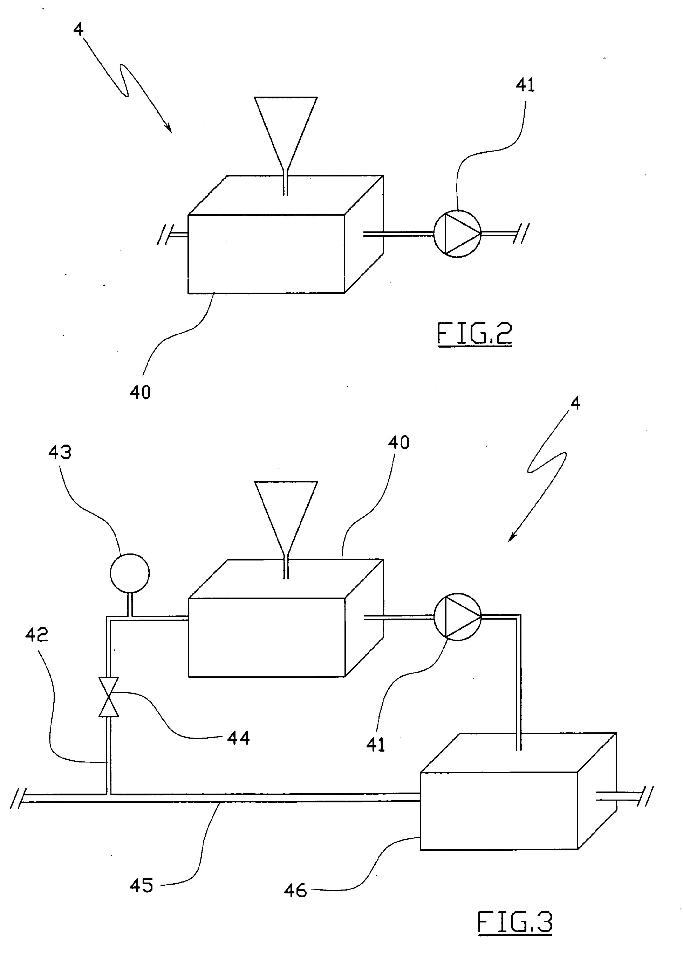

According to a first embodiment shown in Figure 2, the mixing unit 4 comprises a liquid-solid mixer 40, which is fed by the delivery line of the pump 3 and by the colorant material feed unit 6, and a pump 41 positioned downstream of said liquid-solid mixer 40 which forces the coloured slip obtained towards the atomizer service tank 8.

In this manner, said liquid-solid mixer 40 is traversed by the entire flow of neutral slip withdrawn from the storage tank 2, and is hence able to directly give said slip the final coloration required by the plant 1.

According to an alternative embodiment of the mixing unit 4 shown in Figure 3, the delivery line of the pump 3 is divided into two separate lines, of which a first line 42 is provided with a flowmeter 43 and a regulator valve 44 to feed the liquid-solid mixer 40, and a second line 45 acts as a bypass.

Downstream of the liquid-solid mixer 40 the pump 41 feeds a liquid-liquid mixer 46, which is also fed by said bypass line 45.

In this manner, the liquid-solid mixer 40 is traversed only by a part of the neutral slip flow originating from the storage tank 2, regulated by the valve 44, and hence provides a concentrated coloured slip which is then mixed in the liquid-liquid mixer 46 with the remaining part of the neutral slip from the bypass line 45, to obtain the final coloured slip.

By this solution, the liquid-solid mixer 40 can be of smaller dimensions than in the first embodiment, with obvious advantages in terms of plant size and costs.

It should be noted that various types of liquid-solid mixer able to effectively satisfy the functional requirements of the plant 1 independently of the embodiment chosen for the mixing unit 4 have been identified commercially, these being listed as follows by way of example: model PSI MIX produced by NETSZCH, model XC produced by YTRON, model BACHLINE produced by BACHILLER, model SLIM produced by ROSS and model DISPERSHEAR produced by ARDE BARINCO.

According to a first embodiment shown in Figure 1, the colorant material feed unit 6 comprises a plurality of dispensers 50, each of which consists of an upper hopper 51 and an extraction-dispensing system positioned at the lower exit mouth of the hopper 51.

Said extraction-dispensing system is composed of a screw extraction system 52 and a dispensing system with a projecting conveyor belt 53. This configuration is indicated by way of example and is non-limiting.

The dispensers 50 are each arranged to contain colorant powder of a specific colour, and are arranged to continuously dispense metered quantities of said colorant powder onto a conveyor belt 54, including simultaneously, in accordance with a predetermined recipe set in the logic unit 10.

The conveyor belt 54 continuously transfers the colorant powders directly into the liquid-solid mixer 40.

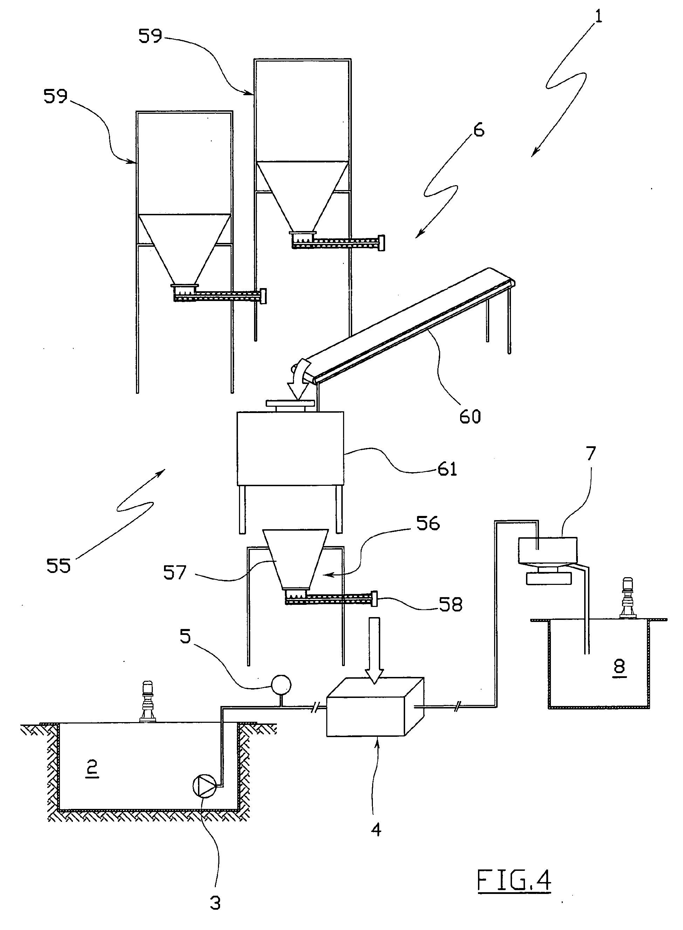

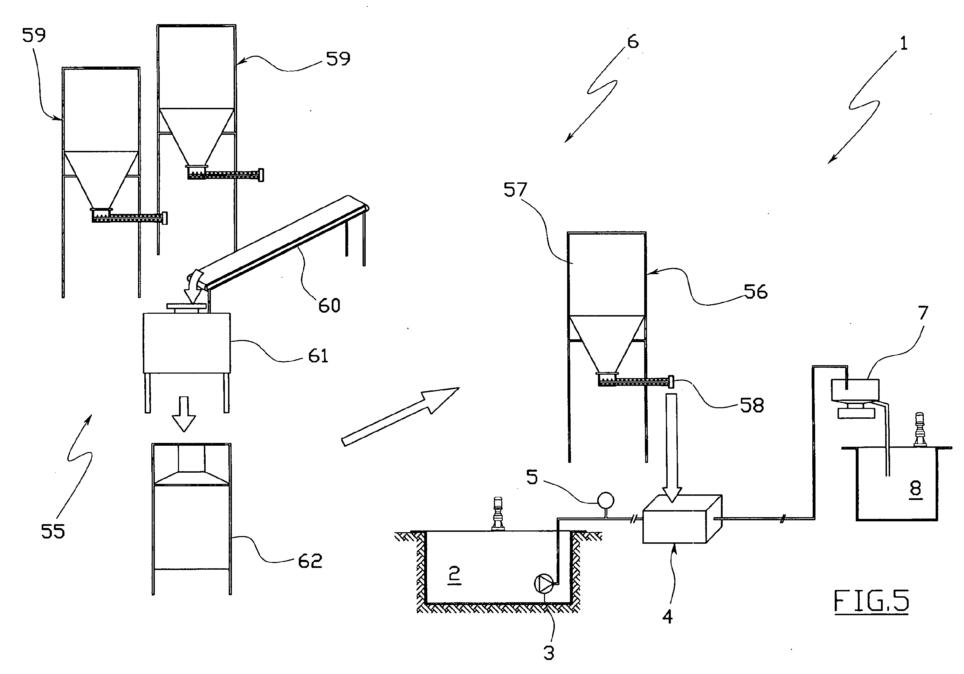

In two alternative embodiments shown in Figures 4 and 5 respectively, the powder material feed unit 6 comprises means, indicated overall by 55, for preparing a homogeneous mixture of colorant powders of different colours, and a dispenser 56 for continuously dispensing metered quantities of said homogeneous mixture into the liquid-solid mixer 40 of the mixing unit 4.

In detail, said dispenser 56 comprises an upper hopper 57 to be loaded with the homogeneous mixture of colorant powders, and a dispensing system 58 positioned at the lower exit mouth of the hopper 57.

The means 55 for preparing the mixture of colorant powders comprise a plurality of dispensers 59, each of which contains colorant powder of a specific colour, and is arranged to discontinuously dispense metered quantities of said colorant powder onto a conveyor belt 60, which transfers it into a solid-solid mixer 61 of batch type.

In the embodiment shown in Figure 4, said solid-solid mixer 61 discharges the obtained mixture of colorant powders directly into the upper hopper 57 of the dispenser 56, which acts as a buffer store to make the discontinuous operation of the solid-solid mixer 61 compatible with the continuous operation of the mixing unit 4.

According to the embodiment shown in Figure 5, the solid-solid mixer 61 discharges the mixture of colorant powders into a packaging unit 62, which collects it in large bags of suitable dimensions.

The contents of said bags are then loaded discontinuously into the upper hopper 57 of the dispenser 56, which again in this case acts as a buffer store for continuously feeding the mixing unit 4.

With this solution it is advantageously possible to separate the step of preparing the colorant material in powder form from the step of preparing the coloured slip, with possible creation of stocks in store which make these two steps operatively independent of each other, so that the preparation of the colorant material in powder form can be entrusted to or tendered by an external firm, for example a ceramic colouring works.

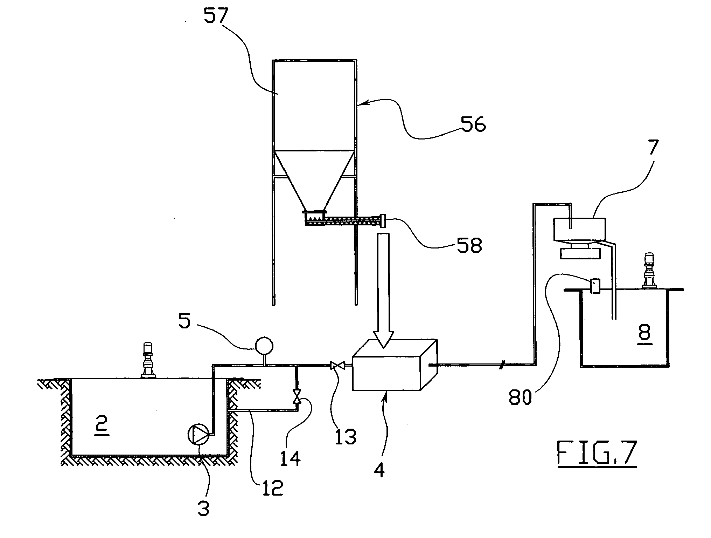

Figure 7 shows a variant of the invention, of which only the new not previously indicated components are described. All those components of Figure 7 identical to already described components are indicated by the same reference numerals.

The plant shown in Figure 7 differs from the described and illustrated embodiments in that a level indicator 80 is associated with the service tank 8 arranged to measure the slip quantity contained therein. The level indicator 80 is connected to the control system of the invention which on the basis of the measured value varies the slip flow into the tank such that the slip level in the tank always lies between a minimum value and a maximum value which are predetermined by the operator on the basis of production requirements.

The plant illustrated in Figure 7 also differs from the previously described plants by the presence of means for deviating to the storage tank that neutral slip pumped by the pump 3 during transient pumping periods. These means comprise a bypass line 12 between the delivery line of the pump 3 and the storage tank 2. Two valves 13 and 14 are associated with the bypass line 12, the valve 13 being positioned upstream of the mixing unit 4 and the valve 14 being positioned in the line itself. As stated, the function of the bypass line 12 and of the valves 13 and 14 is to feed the neutral slip pumped by the pump 3 into the tank 2 during the initial transient period of the pump 3, i.e. during the time between the starting of the pump and the attainment of its working flow rate. During this time period the valve 14 is open while the valve 13 is closed. The valves 13 and 14 are controlled by the plant control system, which measures the instantaneous pump flow rate by means of the flowmeter 5. When the pump has reached its working flow rate, the control system excludes the bypass line by closing the valve 14, while at the same time opening the valve 13 such that the liquid is fed into the mixing unit 4.

Finally it should be noted that both the level sensor 80 and the bypass line 12 can also be used in the other embodiments of the invention.

Numerous modifications of a practical and applicational nature can be made to the present invention, but without leaving the scope of the inventive idea as claimed below.

## Claims

1. A method for preparing coloured materials in powder form for the manufacture of ceramic articles, comprising the following operative steps:
- preparing neutral slip;
- feeding a predetermined quantity of said neutral slip into a liquid-solid mixer (40);
- feeding a metered quantity of colorant material in powder form into said liquid-solid mixer (40); and
- mixing together the neutral slip and colorant material in powder form in the liquid-solid mixer (40), to obtain coloured slip.

2. A method as claimed in claim 1, **characterised in that** the neutral slip feed, the colorant material feed and the mixing are carried out continuously.

3. A method as claimed in claim 1, **characterised by** comprising the following further operative steps:
- feeding a predetermined quantity of concentrated coloured slip leaving the liquid-solid mixer (40) into a liquid-liquid mixer (46);
- feeding a predetermined quantity of neutral slip into said liquid-liquid mixer (46); and
- mixing the concentrated coloured slip and the neutral slip within the liquid-liquid mixer (46), to obtain coloured slip of desired coloured tone.

4. A method as claimed in claim 1, **characterised by** comprising the following further operative steps:
- measuring the coloration of ceramic samples obtained from the coloured slip resulting from the process;
- comparing the measured colour parameters with predetermined desired colour parameters; and
- regulating by feedback the relative quantities of neutral slip and colorant material mixed together, to obtain coloured slip of the desired coloration.

5. A method as claimed in claim 1, **characterised in that** said colorant material is fed in the form of a plurality of colorant powders of different colours.

6. A method as claimed in claim 1, **characterised in that** said colorant material is fed in the form of a mixture of colorant powders of different colours.

7. A method as claimed in claim 6, **characterised in that** said mixture of colorant powders is prepared by the following operative steps:
- feeding metered quantities of colorant powders of different colours into a solid-solid mixer (61); and
- mixing said colorant powders within said solid-solid mixer (61), to obtain the desired mixture.

8. A method as claimed in claim 7, **characterised by** feeding the obtained mixture of colorant powders directly into the liquid-solid mixer (40).

9. A method as claimed in claim 7, **characterised by** collecting the obtained mixture of colorant powders in bags, the contents of which are used to fed the liquid-solid mixer (40).

10. A plant for preparing coloured materials in powder form for the manufacture of ceramic articles, comprising means for preparing neutral slip, means for feeding a predetermined quantity of said neutral slip into a mixing unit (4), and means for feeding colorant material in powder form into said mixing unit (4), such as to mix together the neutral slip and the colorant material in powder form to obtain coloured slip.

11. A plant as claimed in claim 10, **characterised in that** said neutral slip feed means, said means for feeding colorant material in powder form and said mixing unit (4) operate continuously.

12. A plant as claimed in claim 10, **characterised in that** said neutral slip feed means comprise a storage tank (2) and a pump (3) for transferring a flow of neutral slip from said storage tank (2) to the mixing unit (4).

13. A plant as claimed in claim 10, **characterised by** comprising means (5) for measuring the quantity of neutral slip transferred to the mixing unit (4).

14. A plant as claimed in claim 10, **characterised in that** said mixing unit (4) comprises at least one liquid-solid mixer (40) for mixing together neutral slip and colorant material in powder form.

15. A plant as claimed in claim 14, **characterised in that** said mixing unit (4) also comprises a liquid-liquid mixer (46), means for feeding a predetermined quantity of coloured slip leaving the liquid-solid mixer (40) into said liquid-liquid mixer (46), and means for feeding a predetermined quantity of neutral slip into said liquid-liquid mixer (46), to mix the coloured slip and the neutral slip together in order to obtain coloured slip of the desired colour tone.

16. A plant as claimed in claim 10, **characterised by** comprising sensors (9) for measuring the coloration of the coloured slip, and a logic unit (10) to compare the measured colour parameters with predetermined desired colour parameters, and for regulating the neutral slip feed means and the colorant material feed means in order to obtain the desired coloration of the coloured slip.

17. A plant as claimed in claim 16, **characterised in that** said sensors comprise a spectrophotometer (9).

18. A plant as claimed in claim 10, **characterised in that** said colorant material is in the form of a plurality of colorant powders of different colours, the means for feeding it into the mixing unit (4) comprising a plurality of dispensers (50) for dispensing metered quantities of said colorant powders.

19. A plant as claimed in claim 18, **characterised in that** said dispensers (50) release the colorant powders onto one and the same conveyor belt (54), which transfers them to the mixing unit (4).

20. A plant as claimed in claim 10, **characterised in that** said colorant material is in the form of a mixture of colorant powders of different colours, the means for feeding it into the mixing unit (4) comprising a dispenser (56) for dispensing metered quantities of said mixture.

21. A plant as claimed in claim 20, **characterised by** comprising means (55) for preparing said mixture of colorant powders.

22. A plant as claimed in claim 21, **characterised in that** said means (55) for preparing the mixture of colorant powders comprise a plurality of dispensers (59) for feeding metered quantities of said colorant powders to a solid-solid mixer (61).

23. A plant as claimed in claim 22, **characterised in that** said solid-solid mixer (61) discharges the mixture of colorant powders directly into the dispenser (56) which feeds the mixing unit (4).

24. A plant as claimed in claim 22, **characterised in that** said solid-solid mixer (61) discharges the mixture of colorant powders into a packaging unit (62) which collects it in bags.

25. A plant as claimed in claim 10, **characterised in that** said mixing unit (4) is connected to a service tank (8) for the slip leaving the mixing unit (4).

26. A plant as claimed in claim 25, **characterised in that** said service tank (8) is associated with a level indicator (80) for the slip contained in said tank.

27. A plant as claimed in claim 12, **characterised by** comprising means for deviating that neutral slip pumped by the pump (3) into the storage tank (2) during the pump transient periods.

28. A plant as claimed in claim 27, **characterised in that** said means comprise a bypass line (12) positioned between the delivery line of the pump (3) and the storage tank (2), a first valve (13) positioned in the pump delivery line between the bypass line (12) and the mixing unit (4), and a second valve (14) positioned in the bypass line (12).
